# EUROPÄISCHE PATENTSCHRIFT

(11) **EP 1 002 593 B1**
(45) Veröffentlichungstag und Bekanntmachung des Hinweises auf die Patenterteilung: **27.08.2003**
(21) Anmeldenummer: 98119989.6
(22) Anmeldetag: 22.10.1998
(51) Int. Cl.: B21D 28/34, F16D 1/08

(54) **Verfahren zum Herstellen einer Nabe durch Stanzen**
Method of making a hub by punching
Procédé de fabrication d'un moyeu par poinçonnage

(43) Veröffentlichungstag der Anmeldung: 24.05.2000
(73) Patentinhaber: Electrolux AG, 8021 Zürich (CH)
(72) Erfinder: Schröder, Walter, 8820 Wadenswil (CH)
(74) Vertreter: Schröer, Gernot, Dipl.-Phys.

(56) Entgegenhaltungen:
- EP-A- 0 631 062
- WO-A-92/12355
- DE-A- 4 209 153
- DE-A- 4 231 360
- DE-A- 19 633 541

## Beschreibung

Die Erfindung betrifft ein Verfahren zum Herstellen einer Nabe.

Aus *DE 42 09 153 C2* ist eine Welle-Nabe-Verbindung bekannt, bei der auf der Umfangsfläche der Welle eine Mehrzahl keilförmiger Erhebungen und auf der Innenfläche der Nabe die gleiche Anzahl entsprechender keilförmiger Ausnehmungen angeordnet sind und die Steigung der Keilflächen im wesentlichen den Verlauf einer logarithmischen Spirale folgt und so flach ist, daß in Abhängigkeit von Material und Beschaffenheit der Oberflächen der Keilflächen sichere Selbsthemmung gegeben ist. Durch eine Drehbewegung der Nabe relativ zur Welle tritt nämlich zwischen den korrespondierenden Keilflächen von Welle und Nabe zunächst eine flächige Berührung, dann ein Reibschluß und bei noch weiterer Drehung schließlich eine rasch zunehmende, überall gleich hohe Flächenpressung (Kraftschluß) zwischen den Keilflächen ein. Die Drehbewegung wird fortgesetzt, bis entweder das vorgesehene, zu übertragende Moment oder die vorgesehene Winkelstellung zwischen Welle und Nabe erreicht ist. Zum Herstellen der Teilflächen von Welle und Nabe sind in der *DE 42 09 153 C2* ein Verfahren zur Abtragung von Material wie Fräsen oder Hobeln sowie ein Strangpreß- oder Strangziehverfahren angegeben. Als Anwendungen sind die Verbindung von Nocken auf einer Nockenwelle oder von Zahnrädern auf einer Getriebewelle eines Kraftfahrzeugs, die Verbindung von Streckwerkswalzenabschnitten, beispielsweise bei Spinnereimaschinen, ein Wirkmaschinen-Gelenkgetriebe und die Verbindung von Rohren in Rohrkonstruktionen wie Geländern an Treppen oder Maschinen, Spulengatter für Textilmaschinen oder Leitern angegeben.

Aus der *DE 196 33 541 A1* ist eine Weiterbildung der aus der *DE 42 09 153 C2* bekannten Welle-Nabe-Verbindung bekannt, bei der auf der Außenumfangsfläche der Welle und/Oder Innenumfangsfläche der Nabe in axialer Richtung der Welle bzw. Nabe zusätzlich zu den Keilflächen zumindest eine Erhebung und/oder eine Vertiefung zur axialen Sicherung der Verbindung angeordnet sind. Insbesondere können diese Erhebungen und Vertiefungen derart angeordnet sein, daß eine Art Gewinde entsteht, so daß in einer Ausführung als Bolzen für die Welle und einer Mutter für die Nabe ein Ersatz für eine Schraubverbindung angegeben wird, bei der zusätzlich zu der Axialsicherung eine axiale Vorspannkraft ähnlich einer üblichen Gewindeschraube erzeugt wird.

Der Erfindung liegt nun die Aufgabe zugrunde, ein einfaches und kostengünstiges Verfahren zum Herstellen einer Nabe zur Aufnahme eines Schaftes anzugeben.

Diese Aufgabe wird gemäß der Erfindung gelöst mit den Merkmalen des Anspruchs 1.

Beim dem Verfahren zum Herstellen einer Nabe zur Aufnahme eines Schaftes werden
a) in einem ersten Verfahrensschritt ein Nabenkörper und ein Stanzwerkzeug mit einem Stanzstempel, der an seiner Unterseite eine vorgegebene Anzahl von jeweils im Abstand zu einer Mittelachse in Umfangsrichtung zunehmenden oder abnehmenden Schneidkanten aufweist, bereitgestellt und
b) in einem zweiten Verfahrensschritt mit dem Stanzstempel (mit der Unterseite voraus) in dem Nabenkörper die Nabe ausgestanzt.

Die Erfindung beruht auf der Überlegung, daß die Schaft-Nabe-Verbindung nach Art der aus der eingangs genannten Druckschrift *DE 42 09 153 C2* bekannten Ausführungsform auch für Verbindungen geeignet ist, die nur einer vergleichsweise geringen Kraftbeanspruchung ausgesetzt sind, und daß bei solchen Verbindungen die Nabe auch relativ flach ausgebildet sein kann. Die Erfindung beruht ferner auf der weiteren Überlegung, daß eine geeignete Nabe mit relativ geringer Tiefe auch durch einen Stanzprozeß erzeugt werden kann, wobei die erreichbare Tiefe der Nabe vom Material des Nabenkörpers, dem Stanzwerkzeug und dem Stanzdruck abhängt. Damit werden das insbesondere für die.Blechbearbeitung hervorragend geeignete und kostengünstige Verfahren des Stanzens und dessen fertigungstechnische Vorteile zur Herstellung der genannten Nabe nutzbar gemacht.

Vorteilhafte Weiterbildungen und Ausgestaltungen des Verfahrens gemäß der Erfindung ergeben sich aus den vom Anspruch 1 abhängigen Ansprüchen.

Demnach wird in einer besonders vorteilhaften Ausführungsform ein Nabenkörper verwendet, der zumindest in einem Verbindungsbereich eine Dicke von höchstens 5 mm, vorzugsweise höchstens 1 mm, aufweist, und die Nabe wird in dem Verbindungsbereich des Nabenkörpers gestanzt. Nabenkörper solcher Dicken sind mit den üblichen Werkstoffen und Stanzwerkzeugen problemlos zu stanzen.

Eine mit dem Verfahren gemäß der Erfindung hergestellte Nabe wird im allgemeinen zum Verbinden eines ersten Körpers mit einem zweiten Körper eingesetzt, wobei der erste Körper einen Schaft mit einer Außenwandung mit einer vorgegebenen Anzahl von bezüglich einer Schaftachse radial ansteigenden oder abfallenden Außenwandungsteilbereichen aufweist und der zweite Körper die Nabe aufweist und der Schaft in die Nabe eingefügt wird sowie durch Drehung zwischen Schaft und Nabe jeder Außenwandungsteilbereich des Schaftes mit jeweils einem zugeordneten Innenwandungsteilbereich der Nabe in reibschlüssige oder kraftschlüssige Verbindung gebracht wird.

Besonders vorteilhaft sind die Verfahren gemäß der Erfindung bei Verwendung eines Metallbleches, insbesondere eines Stahlbleches oder eines Aluminiumbleches, als Nabenkörper, insbesondere in Kombination mit einem Schaft aus einem Kunststoff. Der Schaft kann aus einem plastisch verformbaren Material bestehen, so daß bei einem bestimmten Drehmoment eine oder auch aus einem elastisch verformbaren Material bestehen.

In einer Ausgestaltung des Verfahrens werden die Innenwandungsteilbereiche der Nabe oder die Schneidkanten des Stanzstempels mit einer in Umfangsrichtung im wesentlichen konstanten radialen Steigung erzeugt. Bei entsprechend gefoprmten Außenwandungsteilbereichen des Schaftes erreicht man so eine homogene Kraftverteilung über die gesamte Verbindungsfläche.

Die Nabe wird in einer vorteilhaften Ausführungsform bezüglich der Nabenachse mit einer Rotationssymmetrie einer vorgegebenen Zähligkeit erzeugt, insbesondere indem die Schneidkanten des Stanzstempels eine entsprechende Symmetrie aufweisen. Der demnach entsprechend symmetrische Schaft wird in dieser Ausführungsform bei der Drehung automatisch in der Nabe zentriert (selbstzentrierte Verbindung).

Um ein definiertes Drehmoment bzw. einen definierten Drehwinkel bei der Schaft-Nabe-Verbindung zu erreichen und insbesondere den dünnen Nabenkörper vor einem Überdrehen des Schaftes und den dadurch wirkenden Scher- und Torsionskräften zu schützen, werden in einer besonders vorteilhaften Ausführungsform Anschlagsmittel zur Begrenzung des Drehmoments bzw. Drehwinkels vorgesehen, die mit wenigstens einem Anschlagskörper und einer korrespondierenden Gegenfläche gebildet sind.

Zur weiteren Erläuterung der Erfindung wird auf die Zeichnungen Bezug genommen, in denen Ausführungsbeispiele gemäß der Erfindung jeweils schematisch dargestellt sind. Es zeigen:
- FIG 1: einen Nabenkörper und ein Stanzwerkzeug in einem seitlichen Schnitt,
- FIG 2: das Stanzwerkzeug gemäß FIG 1 in einer Ansicht von unten,
- FIG 3: eine gestanzte Nabe in einem Nabenkörper in einem seitlichen Schnitt,
- FIG 4: die gestanzte Nabe gemäß FIG 3 in einer Draufsicht,
- FIG 5: die Nabe gemäß FIG 4 mit einem eingefügten Schaft in einem Querschnitt,
- FIG 6: die Nabe und den Schaft gemäß FIG 5 nach Verdrehen des Schaftes relativ zur Nabe um einen vorgegebenen Drehwinkel in einem Querschnitt ,
- FIG 7: einen ersten Körper mit einem Schaft und einem Anschlagsstift in einer Vorderansicht,
- FIG 8: den ersten Körper gemäß FIG 7 nach Einführen und Verdrehen des Schaftes in die Nabe eines Nabenkörpers in einer Vorderansicht und
- FIG 9: die beiden miteinander verbundenen Körper gemäß FIG 8 in einer teilweise geschnittenen Seitenansicht.

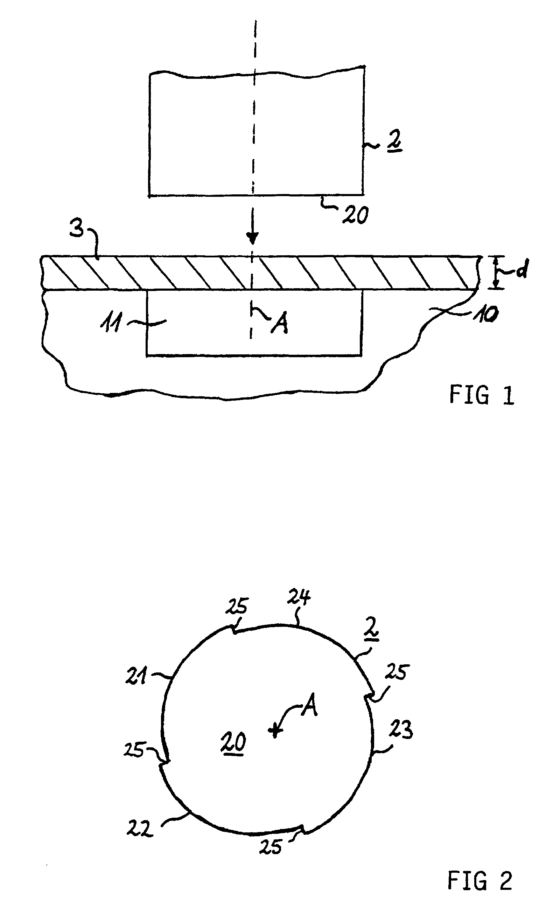

Das Stanzwerkzeug gemäß den FIG 1 und 2 weist einen Stanzstempel 2 und als Gegenstück eine Halterung 10 mit einer Ausnehmung 11 auf. Auf der Halterung (Tragekörper, Auflage, Matrix) 10 liegt ein zu stanzender, vorzugsweise plattenförmiger Nabenkörper 3 auf, der insbesondere eine gleichmäßige Dicke aufweisen kann. Die Dicke des Nabenkörpers 3 ist mit d bezeichnet. Der Stanzstempel 2 weist an der Kontur (Schneidkontur) seiner, vorzugsweise im wesentlichen flachen, Unterseite 20 mehrere, beispielsweise wie dargestellt vier, Schneidkanten 21 bis 24 und jeweils zwei dieser Schneidkanten 21 bis 24 verbindende.Schneidkanten 25 auf. Die Schneidkanten 21 bis 24 nehmen radial, d.h. in ihrem Abstand zu einer Mittelachse A des Schneidstempels 2 in einer vorgegebenen Umfangsrichtung (in Azimutrichtung), hier im Uhrzeigersinn, monoton oder sogar streng monoton (kontinuierlich) zu. Gemäß FIG 2 im Uhrzeigersinn gesehen ist die radiale Steigung (Änderung des Abstands von der Mittelachse A mit dem Azimutwinkel) der Schneidkanten 21 bis 24 also größer oder gleich bzw. immer größer Null. Insbesondere können die Schneidkanten 21 bis 24 die Gestalt von Spiralenabschnitten, vorzugsweise von logarithmischen Spiralenabschnitten, aufweisen. Bei logarithmischen Spiralenabschnitten ist die radiale Steigung in der Umfangsrichtung konstant. Zwischen den einzelnen Schneidkanten 21 bis 24 liegt jeweils eine Schneidkante 25, die die beiden benachbarten Schneidkanten 21 und 22 bzw. 22 und 23 bzw. 23 und 24 bzw. 24 und 21 miteinander verbindet. Im dargestellten Ausführungsbeispiel gemäß FIG 2 sind die Schneidkanten 25 im wesentlichen geradlinig und radial ausgerichtet. Auf die genaue Form der Schneidkanten 25 kommt es jedoch nicht an. Insbesondere können die Schneidkanten 25 auch einen flacheren Verlauf haben. Jedoch sollten die Schneidkanten 25 in Umfangsrichtung geringer ausgedehnt sein als die Schneidkanten 21 bis 24.

Im dargestellten Ausführungsbeispiel gemäß FIG 2 sind die Schneidkanten 21 bis 24 derart rotationssymmetrisch zueinander angeordnet, daß bei einer Drehung des Schneidstempels 2 um seine Mittelachse A um jeweils 90 Grad eine Deckungsgleichheit (Kongruenz) erreicht wird. Es liegt also -mathematisch ausgedrückt- eine vierzählige Rotationssymmetrie des Schneidstempels 2 bezüglich der Mittelachse A als Symmetrieachse vor.

In Abweichung von FIG 2 können natürlich auch weniger oder mehr Schneidkanten vorgesehen sein, deren radiale Steigung jeweils konstant sein oder auch in Umfangsrichtung zu- oder abnehmen kann. Der Schneidstempel 2 weist dann im allgemeinen bezüglich der Mittelachse A eine der Anzahl der Schneidkanten entsprechende Zähligkeit auf. Das Schneidwerkzeug 2 muß aber nicht rotationssymmetrisch sein, sondern es können die Schneidkanten auch asymmetrisch bezüglich der Mittelachse A angeordnet sein, wobei an den übrigen Außenwandungsbereichen des Schneidwerkzeuges 2 dann insbesondere eine zylindrische Form gewählt werden kann.

Beim Stanzprozeß wird nun der Stanzstempel 2 gemäß FIG 1 in einer parallel zur Mittelachse A liegenden Stanzrichtung entlang des dargestellten Pfeiles zu dem Nabenkörper 3 geführt und durch diesen mit einer vorgegebenen Stanzkraft (Stanzdruck), die in Abhängigkeit von dem Material des Nabenkörpers 3, der Dicke d des Nabenkörpers 3 und der Form und Materialbeschaffenheit des Stanzwerkzeugs 2 gewählt ist, gedrückt. Durch das flächige Aufsetzen des Stanzstempels 2 mit seiner Unterseite 20 auf die Oberfläche des Nabenkörpers 3 werden Verformungsprozesse im Nabenkörper 3 beim Stanzen reduziert. Der Stanzstempel 2 wird nach dem Durchschneiden des Nabenkörpers 3 noch ein Stück i die Ausnehmung 11 des Nabenkörpers 3 bewegt und dann angehalten. Die Ausnehmung 11 der Halterung 10 ist vorzugsweise der Form, insbesondere der Querschnittskontur, des Stanzstempels 2 angepaßt, so daß der Nebenkörper 3 entlang des Randes der Ausnehmung 11 von der Halterung 10 optimal abgestützt ist und ein sauberer Stanzschnitt im wesentlichen ohne eine (sonstige) Verformung des Nabenkörpers 3 erreicht wird.

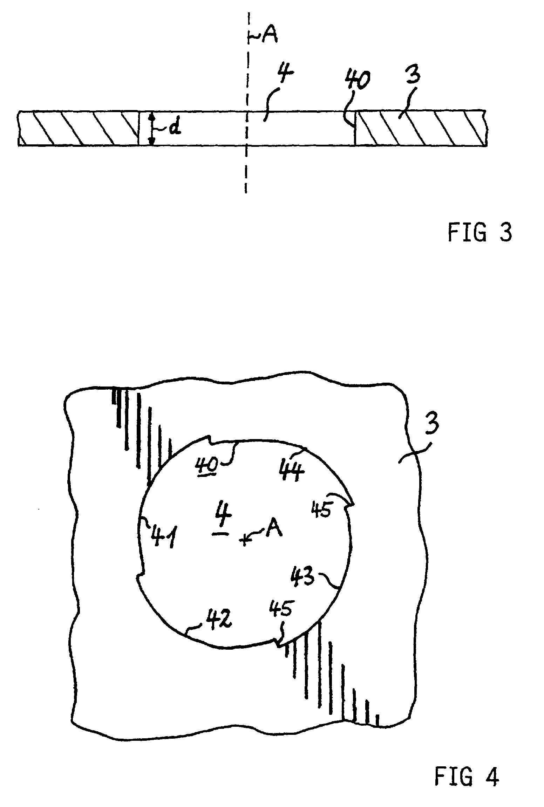

Das Ergebnis des Stanzprozesses gemäß den FIG 1 und 2 ist in den FIG 3 und 4 dargestellt.

In dem Nabenkörper 3 ist als Nabe 4 ein Loch ausgestanzt(ausgeschnitten), dessen Nabeninnenwandung 40 eine Höhe aufweist, die der Dicke d des Nabenkörpers 3 entspricht. Die Gestalt des Stanzstempels 2 gemäß FIG 2 ist gemäß FIG 4 auf die Nabe 4 übertragen. Als zum Stanzstempel 2 komplementäres Gebilde weist die Nabe 4 nun an ihrer Innenwandung 40 vier in Umfangsrichtung radial ansteigende Innenwandungsteilbereiche 41 bis 44 auf, die jeweils über radial verlaufende Innenwandungsteilbereiche 45 miteinander verbunden sind. Die konvexe Gestalt des Stanzstempels 2 schlägt sich im Stanzprozeß in einer entsprechend, bezogen auf den Nabenkörper 3 konkaven Gestalt der Nabe 4 nieder. Die Mittelachse A ist durch die parallel zu dieser Mittelachse A gewählte Stanzrichtung nun auch die Nabenachse der Nabe 4.

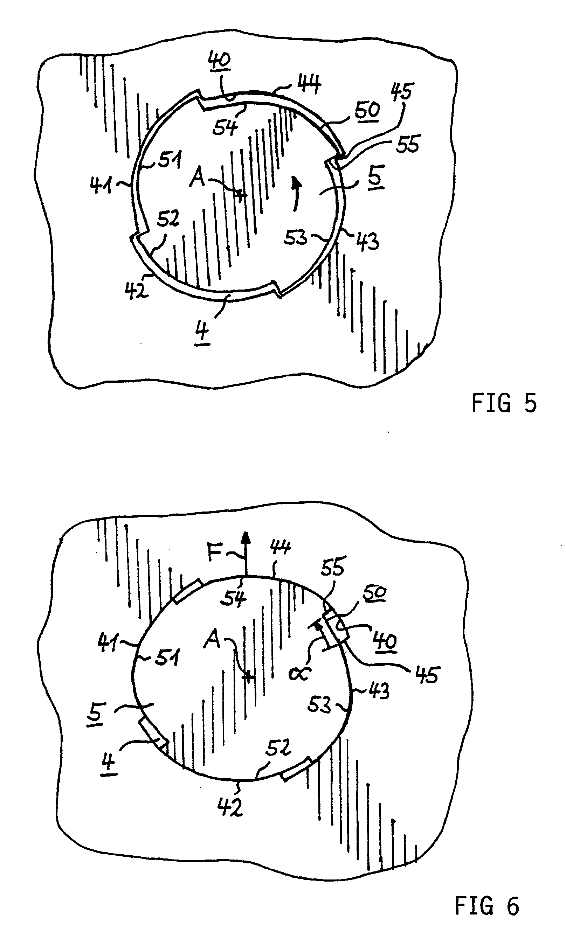

Die FIG 5 und 6 zeigen nun die Verwendung der Nabe 4 gemäß den FIG 3 und 4 in einer Schaft-Nabe-Verbindung. Es ist zur Herstellung dieser Verbindung ein Schaft (Bolzen, Welle) 5 in die Nabe 4 eingefügt. Der Schaft 5 ist im Querschnitt ähnlich wie das Stanzwerkzeug, 2 gemäß FIG 2 ausgebildet und weist somit vier Außenwandungsteilbereiche 51 bis 54 seiner Außenwandung 50 auf, die jeweils wieder durch dazwischenliegende, beispielsweise radial verlaufende, Außenwandungsteilbereiche 55 miteinander verbunden sind und radial in Umfangsrichtung im Uhrzeigersinn zunehmen.

FIG 5 zeigt einen Zustand, in dem der Schaft 5 lose axial, d.h. parallel zur Mittelachse M, in die Nabe 4 eingeführt ist. Die Innenwandungsteilbereiche 55 liegen in diesem losen Zustand gemäß FIG 5 an den Innenwandungsteilbereichen 45 der Nabe 4 an, können aber auch von diesen beabstandet sein. Zwischen den Außenwandungsteilbereichen 51 bis 54 des Schaftes 5 und den unmittelbar gegenüberliegenden Innenwandungsbereichen 41 bis 44 der Nabe 4 sind jeweils Spalte gebildet.

Bei Verdrehen des Schaftes 5 in der dargestellten Pfeilrichtung, also entgegen dem Uhrzeigersinn, um die gemeinsame Mittelachse A als Drehachse wird nun jeder der Außenwandungsteilbereiche 41 bis 54 des Schaftes 5 zunächst mit dem korrespondierenden Innenwandungsteilbereich 41 bis 44 der Nabe 4 in Flächenkontakt gebracht. Bei nur geringer Drehung um einen kleinen Drehwinkel α wird lediglich ein Reibschluß zwischen den Innenwandungsteilbereichen 41 und den Außenwandungsteilbereichen 51 bis 54 erzeugt, bei weiterer Drehung, d.h. bei größerem Drehwinkel α oder einem größeren Drehmoment, tritt dagegen ein Kraftschluß oder eine Flächenpressung ein (Preßverbindung). Diesen Zustand mit einer Preßverbindung zwischen Schaft 5 und Nabe 4 zeigt FIG 6.

Die in normaler Richtung zu den beiden in Kraftschluß tretenden Flächen 54 und 44 wirkende Kraft ist mit F bezeichnet. Diese durch die Drehung des Schafts 5 relativ zur Nabe 4 erzeugte Verbindung basiert auf einer über die gesamte Fläche wirkende Flächenpressung, so daß eine sehr homogene Kräfteverteilung erreicht wird. Der Schaft 5 ist im Ausführungsbeispiel gemäß den FIG 5 und 6 massiv ausgebildet, kann aber auch innen hohl sein, beispielsweise in Form eines Hohlzylinders, Ringes oder Rohrstückes.

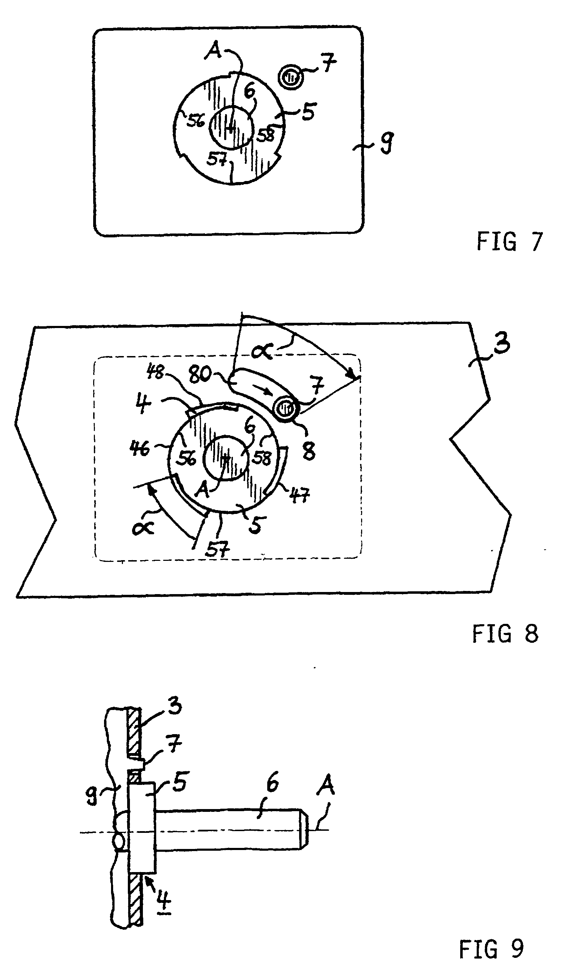

Die FIG 7 bis 9 veranschaulichen nun ein Verfahren zum Verbinden zweier Körper durch eine Schaft-Nabe-Verbindung mit gestanzter Nabe. Gemäß Fig 7 wird ein erster Körper 9 bereitgestellt, an oder in dem eine Drehwelle 6 mit einer Mittelachse A befestigt ist. Die Drehwelle 6 wird umgeben von einem, beispielsweise ringförmigen, Schaft 5, der fest mit dem ersten Körper 9 verbunden ist, insbesondere an diesem befestigt oder angeformt oder mit diesem ausgeformt ist. Ortsfest zum Schaft 5 weist der erste Körper 9 ferner einen Anschlagskörper 7, der beispielsweise stiftförmig ausgebildet sein kann, auf. Der Schaft 5 weist gemäß FIG 7 drei Außenwandungsteilbereiche 56, 57 und 58 auf, die bezüglich der Mittelachse A mit einer dreizähligen Symmetrie angeordnet sind, d.h. bei Drehung um 120 Grad um die Mittelachse A ist der Schaft 5 in seinem Querschnitt jeweils deckungsgleich (kongruent).

Gemäß FIG 8 ist der erste Körper 9 nun von hinten mit einem Nabenkörper 3 als zweitem Körper verbunden. Zur Verbindung wird der Schaft 5 durch eine entsprechend ausgebildetete Nabe 4 im Nabenkörper 3 mit Innenwandungsteilbereichen 46, 47 und 48 eingefügt und in der vorgegebenen Drehrichtung um den Drehwinkel α gedreht, so daß die korrespondierenden Außenwandungsteilbereiche 56 bis 58 an die entsprechenden Innenwandungsteilbereiche 46 bis 48 der Nabe 4 gepreßt werden. Der vorgegebene maximale Drehwinkel α oder ein entsprechendes, vorgegebenes maximales Drehmoment werden in der dargestellten Ausführungsform durch die mit dem Anschlagskörper 7 und eine entsprechende Anschlagsfläche 8 im Nabenkörper 3 gebildeten Anschlagsmittel definiert. Es wird nämlich zugleich mit dem Schaft 5 auch der Anschlagskörper 7 in eine entsprechende Öffnung als Führungsschlitz 80 im Nabenkörper 3 eingeführt und bei der Drehung des Schafts 5 um den Drehwinkel α bis zur Anschlagsfläche 8 mitgedreht. Ein Überdrehen über diese Endposition wird durch die Anschlagsmittel verhindert.

Die FIG 9 zeigt einen teilweise geschnittene Seitenansicht in einem Schnitt durch die Mittelachse A und den in der Endstellung an der Anschlagsfläche 8 befindlichen Anschlagskörper 7.

Die Anschlagsbegrenzung gemäß den FIG 7 bis 9 ermöglicht eine exakte Definition des maximalen Drehwinkels α bzw. des maximalen Drehmoments für die Drehung zur Verbindung von Nabe 4 und Schaft 5. Diese Anschlagsbegrenzung ist besonders vorteilhaft bei einer Schaft-Nabe-Verbindung mit einer in. einem vergleichsweise dünnen Blech als Nabenkörper 3 gestarizten Nabe 4, weil so ein Überdrehen und entsprechendes Verbiegen und Verformen des Blechs des Nabenkörpers 3 verhindert wird. Es versteht sich, daß die Anschlagsbegrenzung auch durch Ausbilden einer Anschlagsfläche am ersten Körper und eines Anschlagkörpers am zweiten Körper erreicht werden kann.

Als Nabenkörper 3 kann in allen Ausführungsformen ein Metailblech vorgesehen sein, insbesondere ein Stahlblech oder ein Blech aus Aluminium oder einer Aluminiumlegierung (Aluminiumblech). Die Dicke d des Nabenkörpers 3 beträgt im allgemeinen höchstens 5 mm, so daß ein Stanzprozeß problemlos möglich ist, und vorzugsweise höchstens 1 mm, insbesondere um Material einzusparen. Es hat sich gezeigt, daß selbst bei diesen vergleichsweise geringen Dicken d bzw. Tiefen der Nabe 4 dennoch eine sichere und haltbare Verbindung zwischen der Nabe 4 und dem Schaft 5 möglich ist.

Das Blech des Nabenkörpers 3 kann nach dem Stanzen der Nabe 4 und vor dem Einführen des Schafts 5 auch in einem Zwischenschritt emailliert werden. Es hat sich überraschenderweise gezeigt, daß bei der Schaft-Nabe-Verbindung gemäß der Erfindung durch die flächige Verbindung und gleichmäßige Kraftübertragung auch die als Emailabbrand bezeichnete Emailanhäufung an den Kanten des gestanzten Loches der Nabe 4 nicht zu einem Abplatzen des Emails bei der Verbindung führt, wie dies bei üblichen Schraubverbindungen oft der Fall ist.

Besonders vorteilhaft ist die Materialkombination eines Blechs, insbesondere eines Metallblechs und vorzugsweise eines Stahlblechs für den Nabenkörper 3 zumindestens in dem Verbidnungsbereich, in dem die Nabe 4 gestanzt wird und einem Kunststoff, insbesondere einem plastisch verformbaren Kunststoff wie beispielsweise einem thermoplastischen oder duroplastischen Polymerkunststoff für den Schaft 5, der dann insbesondere durch ein Gieß- oder Spritzgießverfahren hergestellt werden kann. Es kann allerdings auch ein elastischer Kunststoff verwendet werden, insbesondere wenn eine Geräuschdämmung der Verbindung oder eine zusätzliche Schwingungsentkopplung gewünscht ist.

Die beschriebene gestanzte Nabe und die zugehörige Schaft-Nabe-Verbindung sind in einer Vielzahl von Anwendungsgebieten einsetzbar. Ohne Beschränkung der Allgemeinheit sei hier der Bereich der Haushaltsgeräte genannt, in dem bei den meisten Verbindungen von Bauteilen (Funktionseinheiten) miteinander oder mit Trägern nur relativ geringe Kräfte von der Schaft-Nabe-Verbindung zu tragen sind. Zu denken ist hier beispielsweise an die Befestigung von statischen wie drehenden Teilen an entsprechenden Trägern, insbesondere Elektromotoren, Strömungsmaschinen (Pumpen, Gebläsen) oder Kompressoren an einem Gehäuse, Drehknebeln vor einer Bedienblende an entsprechenden Steuer- und/oder Regelmodulen hinter der Bedienblende, Filtern, Scharnieren an Türen und Gehäusen, Sprüharmen, Behältern usw.. Als Haushaltsgeräte kommen grundsätzlich alle bekannten Haushaltsgeräte in Frage, insbesondere Gargeräte, Waschmaschinen, Wäschetrocknern, Geschirrspülmaschinen, Kühl-und/oder Gefriergeräte, Staubsauger, Kaffeemaschinen, Küchenmaschinen und Mixer.

### Bezugszeichenliste

- 2: Stanzstempel
- 3: Metallblech
- 4: Nabe
- 5: Schaft
- 6: Drehwelle
- 7: Anschlagkörper
- 8: Anschlagfläche
- 10: Halterung
- 11: Ausnehmung
- 20: Unterseite
- 40: Innenwandung
- 41 bis 48: Innenwandungsteilbereiche
- 50: Außenwandung
- 51 bis 58: Außenwandungsteilbereiche
- 80: Führungsschlitz
- d: Dicke

## Patentansprüche

1. Verfahren zum Herstellen einer Nabe (4) zur Aufnahme eines Schaftes (5), bei dem
a) in einem ersten Verfahrensschritt ein Nabenkörper (3) und ein Stanzwerkzeug mit einem Stanzstempel (2), der an seiner Unterseite (20) eine vorgegebene Anzahl von jeweils im Abstand zu einer Mittelachse (A) in Umfangsrichtung zunehmenden oder abnehmenden Schneidkanten (21 bis 24)) aufweist, bereitgestellt werden und
b) in einem zweiten Verfahrensschritt mit dem Stanzstempel (2) in dem Nabenkörper (3) die Nabe (4) ausgestanzt wird.

2. Verfahren nach Anspruch 1, bei dem ein Stanzstempel verwendet wird, dessen Schneidkanten eine in Umfangsrichtung im wesentlichen konstante radiale Steigung .aufweisen.

3. Verfahren nach Anspruch 1 oder Anspruch 2, bei dem ein Stanzstempel verwendet wird, der bezüglich der Mittelachse eine Rotationssymmetrie einer vorgegebenen Zähligkeit aufweist.

4. Verfahren nach einem der vorhergehenden Ansprüche, bei dem ein Nabenkörper verwendet wird, der zumindest in einem Verbindungsbereich eine Dicke von höchstens 5 mm, vorzugsweise höchstens 1 mm, aufweist, und bei dem die Nabe in dem Verbindungsbereich gestanzt wird.

5. Verfahren nach einem der vorhergehenden Ansprüche, bei dem als Nabenkörper ein Metallblech, insbesondere ein Stahlblech oder Aluminiumblech, verwendet wird.

6. Verfahren nach einem der vorhergehenden Ansprüche, bei dem der Nabenkörper (3) mit wenigstens einer zur Nabe ortfesten Anschlagsfläche (8) oder wenigstens einem Anschlagskörper für einen bzw. eine zu dem von der Nabe aufzunehmenden Schaft (5) ortsfest verbundenen Anschlagskörper (7) bzw. Anschlagsfläche versehen wird.

7. Verfahren nach Anspruch 6, bei dem in dem Nabenkörper, vorzugsweise im gleichen Stanzprozeß wie die Nabe, wenigstens ein weiteres Stanzloch gestanzt wird, dessen Innenwandung wenigstens teilweise als Anschlagsfläche (8) verwendet wird.

## Claims

1. Method of producing a hub (4) for receiving a shaft (5), wherein
a) in a first stage a hub body (3) and a punching tool with a punch (2), having on its underside (20) a predetermined number of cutting edges (21 to 24) increasing or decreasing in distance from a central axis (A) in the circumferential direction, are prepared and
b) in a second stage the hub (4) is punched from the hub body (3) with the punch (2).

2. Method according to claim 1, wherein a punch is used whose cutting edges have a substantially constant radial pitch in the circumferential direction.

3. Method according to claim 1 or claim 2, wherein a punch is used which has rotational symmetry of a specified order with respect to the central axis.

4. Method according to one of the preceding claims, wherein a hub body is used which has a thickness of at most 5 mm, preferably 1 mm at least in a connecting region, and wherein the hub is punched in the connecting region.

5. Method according to one of the preceding claims, wherein as a hub body a metal plate, in particular a steel plate or aluminium plate is used.

6. Method according to one of the preceding claims, wherein the hub body (3) is provided with at least one stop face (8) which is fixed with respect to the hub or at least one stop body for a stop body (7) or stop face fixedly connected to the shaft (5) to be received by the hub.

7. Method according to claim 6, wherein in the hub body, preferably in the same punching process as the hub, at least one further punch hold is punched, whose inner wall is used at least in part as a stop face (8).

## Revendications

1. Procédé de fabrication d'un moyeu (4) pour recevoir une tige (5) avec lequel,
a) dans une première étape de procédé un corps de moyeu (3) et un outil de poinçonnage avec un poinçon de découpe (2), qui comprend à sa partie inférieure (20) un nombre déterminé de bords de coupe (21 à 24) s'accroissant ou diminuant en direction périphérique respectivement avec un espacement par rapport à un axe médian (A), sont mis à disposition et
b) dans une deuxième étape de procédé le moyeu (4) est découpé avec le poinçon de découpe (2) dans le corps de moyeu (3).

2. Procédé selon la revendication 1, **caractérisé par** l'utilisation d'un poinçon de découpe dont les bords de coupe comprennent une pente radiale sensiblement constante en direction périphérique.

3. Procédé selon la revendication 1 ou la revendication 2, **caractérisé par** l'utilisation d'un poinçon de découpe qui comprend par rapport à l'axe médian une symétrie de rotation d'un ordre déterminé.

4. Procédé selon l'une quelconque des revendications précédentes, **caractérisé par** l'utilisation d'un corps de moyeu qui, au moins dans une zone de liaison, a une épaisseur d'au maximum 5 mm, de préférence d'au maximum 1 mm, et par le fait que le moyeu fait l'objet d'une découpe par poinçonnage dans la zone de liaison.

5. Procédé selon l'une quelconque des revendications précédentes, **caractérisé par** l'utilisation en tant que corps de moyeu d'une tôle métallique, en particulier d'une tôle en acier ou en aluminium.

6. Procédé selon l'une quelconque des revendications précédentes, **caractérisé en ce que** le corps de moyeu (3) est muni d'au moins une surface de butée (8) stationnaire par rapport au moyeu ou d'au moins un corps de butée pour un corps de butée (7) ou pour une surface de butée relié(e) de manière stationnaire avec la tige (5) à placer dans le moyeu.

7. Procédé selon la revendication 6, **caractérisé en ce que** dans le corps de moyeu est découpé par poinçonnage, de préférence avec le même processus de poinçonnage que pour le moyeu, au moins un autre trou, dont la paroi intérieure est utilisée au moins partiellement comme surface de butée (8).
